Europäisches Patentamt

**European Patent Office**

**Office européen des brevets**

(19)

(11) Publication number: **0 017 658**
A1

# EUROPEAN PATENT APPLICATION

(12)

(21) Application number: **79101968.0**

(22) Date of filing: **13.07.79**

(51) Int. Cl.³: **B 60 C 23/04,** G 01 L 17/00,
G 08 B 21/00

(30) Priority: **16.04.79 GR 58905**

(71) Applicant: **Psomas, Zacherias, 30 Salonon St., Peristeri - Athens (GR)**

(43) Date of publication of application: **29.10.80**
**Bulletin 80/22**

(72) Inventor: **Psomas, Zacherias, 30 Salonon St., Peristeri - Athens (GR)**

(74) Representative: **Agular, Heinz, Dr.rer.pol., Dipl.-Ing., Geroltstrasse 39, D-8000 München (DE)**

(84) Designated Contracting States: **DE**

(54) **An electrical alarm device triggered by loss of pressure in car tyres.**

(57)    Device for giving alarm if the pressure in air chambers or tyres (2) of a running car has reduced by a certain value. Then an electrical alarm circuit closes automatically. Said circuit is formed from the negative terminal of the car battery through the contact set of a pressure valve (1) regulated by the pressure of the corresponding tyre (2), an insulated metallic disc (3), a ball bearing arrangement, an electrode, the contact set of a two-position switch, alarm elements (8, 11) to the positive terminal of the battery. The second position of the switch enables to identify the special tyre (2) in trouble. The function of the alarm elements (8, 11) may be tested by a testing switch (10).

0017658

TITLE MODIFIED
see front page

79 101 968.0                                        January 14th, 1980
Y/AG/17

Psomas, Zacharias, 30 Salonon Street, Peristeri, Athens,
                                                            GREECE
_____

**An electrically Run Alarm Installation in Action when the
Car Air Chambers Present Loss thereof**
_____

The present invention relates to an electrically run alarm installation in action when the car air chambers present loss thereof.

Object of the invention is to provide a device of said type for preventing accidents and material damage caused by loss of pressure of car chambers.

The alarm installation according to the invention comprises a valve regulated according to the pressure of the air chamber, a metal disc bearing insulating material on both sides, a ball bearing arrangement of closed type, an electrode, and an alarm box located in the driver's area. The alarm box is provided with warning or alarm lamps equal in number to the number of the air chambers of the car, a testing knob, an alarm siren, and a double phase switch, one to give the alarm and the other to indicate the air chamber in trouble.

An embodiment of the device according to the invention is for example diagrammatically illustrated by the drawings. In the drawings

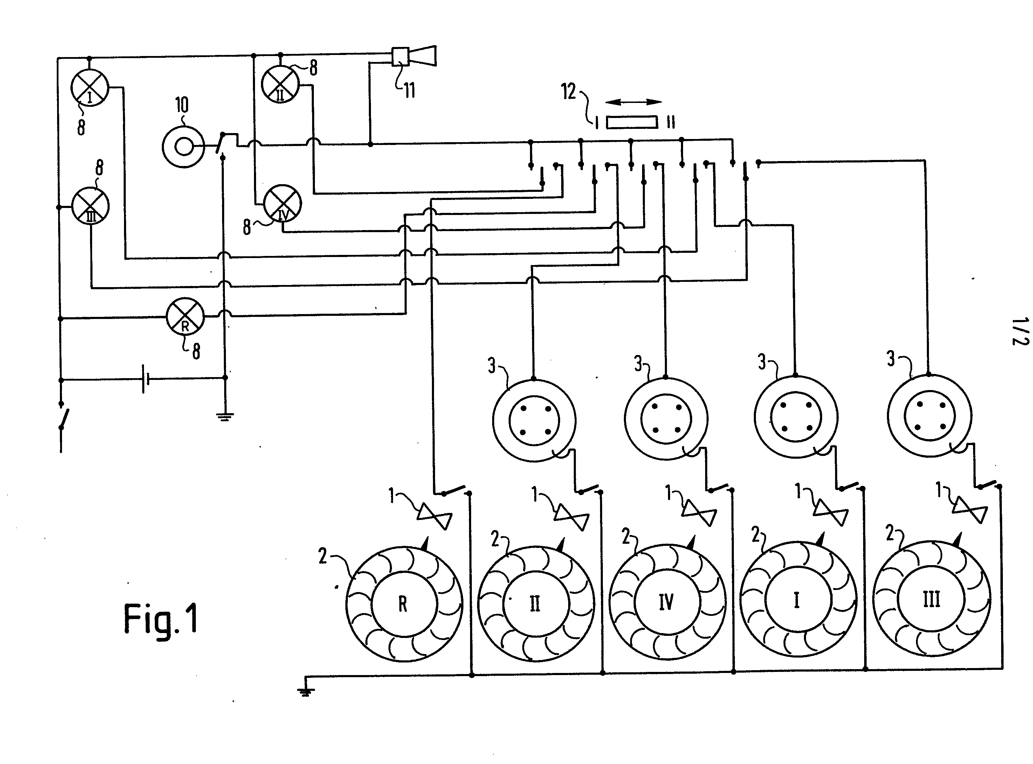

Fig. 1 shows in particular the electrical arrangement of the device, and

0017658

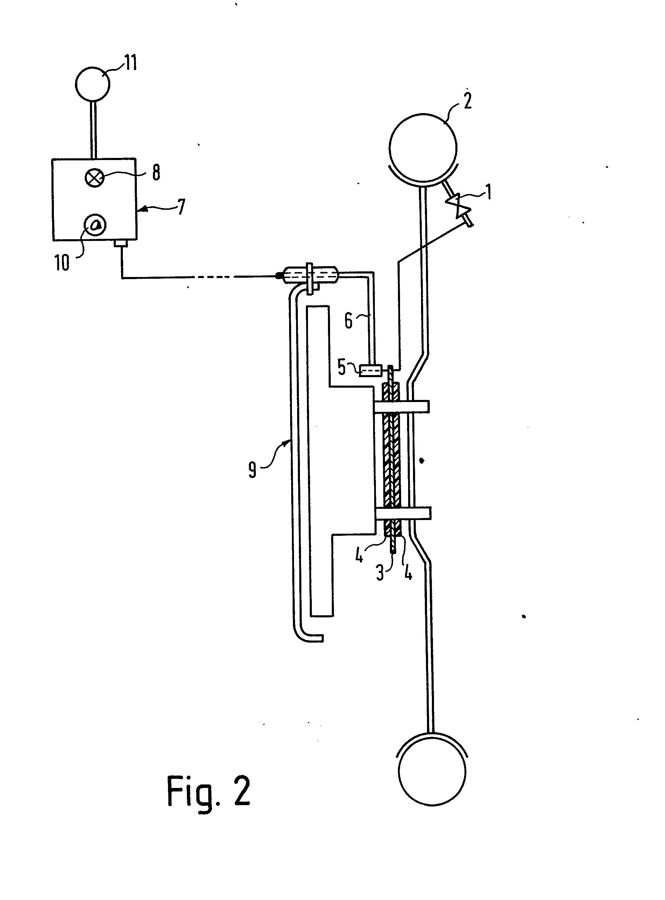

Fig. 2 shows in particular the mechanical arrangement of the device.

The alarm installation according to the invention shown by the drawings comprises a valve 1 regulated according to the pressure of the air chamber 2 (f.i. I, II, III, IV, R), a metal disc 3 bearing insulating material 4 on both sides, a ball bearing arrangement of closed type having a ball bearing piece 5, an electrode 6, and an alarm box 7 located in the driver's area. The alarm box 7 is provided with warning or alarm lamps 8 (f.i. I, II, III, IV, R) equal in number to the number of the air chamber 2 of the car 9, a testing knob 10, an alarm siren 11, and a double phase switch 12, one to give the alarm and the other to indicate the air chamber 2 in trouble.

The system functions in the following manner:

The pressure valve 1 placed on the air chamber valve and screwed on it will be regulated to establish contact when air pressure of an air chamber 2 is reduced by f.i. 2.268 kg. It is connected by a cable to the metal disc 3 which is concentric with the wheel and on the inside of the car 9.

Inside the non-revolving part of the brake there is placed the electrode 6 at the end of which the ball bearing piece 5 is attached in a way that it revolves when the metal disc 3 revolves. The other end of the electrode 6 is connected with the alarm system.

In case there is a loss of f.i. 2.268 kg of pressure in an air chamber 2 the pressure valve 1 closes a circuit through the metal disc 3, the ball bearing piece 5, the electrode 6, and the alarm system, in which case the alarm siren 11 sounds and the alarm lamps 8 are switched on. Switching to the second phase, only the alarm lamp 8 corresponding to the wheel in trouble will light up. Finally by means of the knob 10 of the testing switch the good function of the alarm lamps 8 and the alarm siren 11 is tested.

For the applicant:

Dipl.-Ing. Dr. HEINZ AGULAR
Patentanwalt

79 101 968.0                                    January 14th, 1980
Y/AG/17

## C l a i m

An electrically run alarm installation in action when the car air chambers present loss thereof, characterized by a valve (1) regulated according to the pressure of the air chamber (2), a metal disc (3) bearing insulating material (4) on both sides, a ball bearing arrangement of closed type, an electrode (6), and an alarm box (7) located in the driver's area, said alarm box (7) being provided with warning or alarm lamps (8) equal in number to the number of the air chambers (2) of the car (9), a testing knob (10), an alarm siren (11), and a double phase switch (12), one to give the alarm and the other to indicate the air chamber (2) in trouble.

For the applicant:

Dipl.-Ing. Dr. HEINZ AGULAR
Patentanwalt

0017658

Fig.1

Fig. 2

| Category | Citation of document with indication, where appropriate, of relevant passages | Relevant to claim |
|---|---|---|
| X | US - A - 3 944 971 (C. RAMIREZ)<br>* whole document *<br>-- | 1 |
| | DE - A1 - 2 704 625 (G. KUBANEK)<br>* whole document *<br>-- | 1 |
| | DE - A - 2 230 353 (R.G. WHITEING et al.)<br>* pages 11, 12; fig. 4 *<br>-- | 1 |
| | DE - A - 2 257 341 (NISSAN MOTOR CO.)<br>* page 6, lines 1 to 9; fig. 1 *<br>-- | 1 |
| | DE - C - 894 509 (F. SCHRÖDER)<br>* claim 5 *<br>-- | 1 |
| A | US - A - 3 875 558 (CH.R. SAMPLES)<br>-- | |
| A | US - A - 4 148 008 (J.F. LUSK et al.)<br>---- | |

## DOCUMENTS CONSIDERED TO BE RELEVANT

**CLASSIFICATION OF THE APPLICATION (Int. Cl.3)**

B 60 C 23/04

G 01 L 17/00

G 08 B 21/00

**TECHNICAL FIELDS SEARCHED (Int.Cl.3)**

B 60 C 23/00

G 01 L 17/00

G 08 B 21/00

H 01 H 35/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 11-07-1980 | BEYER |

EPO Form 1503.1 06.78